# EUROPEAN PATENT SPECIFICATION

(11) **EP 3 432 103 B1**
(45) Date of publication and mention of the grant of the patent: **15.02.2023**
(21) Application number: 17766475.2
(22) Date of filing: 08.03.2017
(51) Int. Cl.: G05B 19/418, G06Q 10/00

(54) **DEVICE MANAGEMENT SYSTEM**
VORRICHTUNGSVERWALTUNGSSYSTEM
SYSTÈME DE GESTION DE DISPOSITIF

(30) Priority: 16.03.2016 JP 2016052480
(43) Date of publication of application: 23.01.2019
(73) Proprietor: Ishida Co., Ltd., Kyoto-shi, Kyoto 606-8392 (JP)
(72) Inventor: KOIKE, Shinji, Ritto-shi Shiga 520-3026 (JP); KAWANISHI, Norio, Ritto-shi Shiga 520-3026 (JP); NAKAGAWA, Yuji, Ritto-shi Shiga 520-3026 (JP); OHTANI, Takafumi, Ritto-shi Shiga 520-3026 (JP); SATO, Ryoichi, Ritto-shi Shiga 520-3026 (JP); SASAKI, Ryo, Ritto-shi Shiga 520-3026 (JP); TONG, Yuchuan, Ritto-shi Shiga 520-3026 (JP)
(74) Representative: Gill Jennings & Every LLP
(86) International application number: PCT/JP2017/009151
(87) International publication number: WO 2017/159474

(56) References cited:
- WO-A1-2007/059981
- WO-A2-03/025862
- JP-A- 2001 356 808
- JP-A- 2004 331 107
- JP-A- 2012 252 662
- US-A1- 2009 222 240
- JARDINE A K S ET AL: "A review on machinery diagnostics and prognostics implementing condition-based maintenance", MECHANICAL SYSTEMS AND SIGNAL PROCESSING, ELSEVIER, AMSTERDAM, NL, vol. 20, no. 7, 1 October 2006 (2006-10-01), pages 1483-1510, XP024930393, ISSN: 0888-3270, DOI: 10.1016/J.YMSSP.2005.09.012 [retrieved on 2006-10-01]

## Description

### TECHNICAL FIELD

The present invention relates to a device management system.

### BACKGROUND ART

Conventionally, in a factory, distribution center, or the like, a production line for products is configured by a plurality of devices being combined. For example, Patent Literature 1 (Japanese Laid-open Patent Publication No. 2004-331107) discloses a production line configured by combining various devices including, *inter alia,* a weighing device to weigh commodities carried from an upstream step, a packaging device to package the weighed commodities and discharge the commodities as products, and a boxing device to box the packaged plurality of products.

US 2009/0222240 A describes a baler machine and methods for monitoring performance of multiple machines.

Jardine A K S et al: "A review on machinery diagnostics and prognostics implementing condition-based maintenance", Mechanical Systems and Signal Processing, Elsevier, Amsterdam, NL, vol. 20, no. 7, 1 October 2006 (2006-10-01), pages 1483-1510, describes a condition-based maintenance system.

WO2007059981 A1 discloses a system for transmitting and remotely managing data of a packaging machine.

WO03025862 A2 discloses a system for monitoring the condition of a packaging machine during operation.

### SUMMARY OF THE INVENTION

### <Technical Problem>

When, during production line operation, a situation arises in which any device is unable to perform a normally presumed action due to, *inter alia,* degradation over time and/or a malfunction of a component, the production line needs to be stopped and the products cannot be produced until that device is restored. Therefore, producibility decreases. Consequently, it is preferable to perform maintenance on the devices ahead of time in order to suppress the occurrence of such a scenario.

However, because a production line described above involves a variety of circumstances under which the devices are used in accordance with the configurational aspect and operating situation, it has been difficult to ascertain the timing of maintenance for the devices. Therefore, it has been difficult to suppress producibility decreases that originate with the scenario described above.

An object of the present invention is to provide a device management system to suppress decreases in producibility.

### <Solution to Problem>

According to a first aspect of the present invention we provide a device management system to manage a plurality of production-line-configuring devices that configure a production line for producing products according to claim 1.

The device management system according to the first aspect of the present invention comprises an information accumulation part to accumulate component information pertaining to components included in the production-line-configuring devices, an information analysis part to perform an analysis process of analyzing the component information accumulated in the information accumulation part, and a maintenance information output part to output maintenance information pertaining to maintenance of the components on the basis of the result of the analysis process. According to the aspect described above, component information is accumulated for the components included in the production-line-configuring devices, the component information accumulated is analyzed, and maintenance information pertaining to maintenance is outputted on the basis of the analysis result. As a result, it is possible that maintenance information about the production-line-configuring devices is outputted in accordance with the installation environment and/or operating conditions of the production lines. Therefore, a user or manager of the production-line-configuring devices can easily ascertain the timing of the maintenance. Consequently, it is possible that maintenance of the production-line-configuring devices is performed at an appropriate opportunity, and decreases in producibility of the products will be suppressed.

The "component information" is, for example, information indicating an estimation of the action states, capability values, function characteristics, adjustment anomalies, degradation over time, malfunctions and/or the like of the components included in the production-line-configuring devices.

The "maintenance information" is, for example, information that prompts a user or manager to perform maintenance of the production-line-configuring devices, or information that gives notification of maintenance time period.

The "maintenance information output part" is, for example, an image display part capable of displaying image information as maintenance information, a light source part capable of outputting maintenance information by flashing or lighting up, an audio output part capable of outputting audio information as maintenance information, or a transmission part that transmits maintenance information to another device.

According to the invention, it is possible that, as to a specific production-line-configuring device, while other production-line-configuring devices of the same model have been grouped with the specific production-line-configuring device and the analysis process is performed. As a result, it is possible that maintenance information about the production-line-configuring devices is outputted with high accuracy, in accordance with the installation environment and/or operating conditions of the production lines. Consequently, maintenance of the production-line-configuring devices can be performed with high accuracy at an appropriate opportunity, and decreases in producibility of the products are further suppressed.

According to the invention, it is possible for the analysis process to be performed as to a specific production-line-configuring device on the basis of the result of a comparison with other production-line-configuring devices belonging to the same group. As a result, it is possible that maintenance information about the production-line-configuring devices is outputted with high accuracy, in accordance with the installation environment and/or operating conditions of the production lines. Consequently, maintenance of the production-line-configuring devices can be performed with high accuracy at an appropriate opportunity, and decreases in producibility of the products are further suppressed.

Adjustment anomalies of the components are estimated on the basis of component information accumulated in association with the production-line-configuring devices, and maintenance information is outputted on the basis of the estimation result. As a result, it is possible that maintenance information about the production-line-configuring devices is outputted with high accuracy, in accordance with the installation environment and/or operating conditions of the production lines. Consequently, maintenance of the production-line-configuring devices can be performed with high accuracy at an appropriate opportunity, and decreases in producibility of the products are further suppressed.

Anomalies in the action of the components and/or any deterioration in the capabilities are predicted on the basis of information accumulated in association with the components, and maintenance information is outputted on the basis of the prediction results. As a result, it is possible that maintenance information about the production-line-configuring devices is outputted with high accuracy, in accordance with the installation environment and/or operating conditions of the production lines. Consequently, maintenance of the production-line-configuring devices can be performed with high accuracy at an appropriate opportunity, and decreases in producibility of the products are further suppressed.

The analysis process is performed on the basis of capability information defined in advance in association with the components of the production-line-configuring devices. As a result, it is possible that maintenance information about the production-line-configuring devices is outputted with high accuracy, in accordance with the installation environment and/or operating conditions of the production lines. Consequently, maintenance of the production-line-configuring devices can be performed with high accuracy at an appropriate opportunity, and decreases in producibility of the products are further suppressed.

The information accumulation part, the information analysis part, and/or the maintenance information output part are preferably connected with the production-line-configuring devices via a communication network. The information accumulation part, the information analysis part, and/or the maintenance information output part are placed in a remote location set apart from the space where the production-line-configuring devices are installed.

According to the aspect described above, it is possible to construct the system using equipment installed in a remote location set apart from the facility where the production lines are configured. Consequently, versatility and convenience are improved.

The components (included in the production-line-configuring devices) typically include a knife cylinder, a seal cylinder, and/or a belt of the packaging device.

According to the aspect described above, when a packaging machine is included as a production-line-configuring device, maintenance timing can easily be ascertained for components (the knife cylinder, seal cylinder, or belt) for which there is a higher incidence of malfunction and/or deteriorating of capability due to degradation over time.

### EFFECTS OF THE INVENTION

With the device management system according to the present invention, for the components included in the production-line-configuring devices, component information is accumulated, the component information accumulated is analyzed, and maintenance information pertaining to maintenance is outputted on the basis of the analysis results. As a result, it is possible that maintenance information about the production-line-configuring devices is outputted in accordance with the installation environment and/or the operating conditions of the production lines. Therefore, a user or manager of the production-line-configuring devices can easily ascertain maintenance timing. Consequently, maintenance of the production-line-configuring devices can be performed at an appropriate opportunity, and decreases in producibility of the products are suppressed.

### BRIEF DESCRIPTION OF THE DRAWINGS

FIG 1 is a schematic view roughly showing a configuration of a device management system according to one embodiment of the present invention;
FIG 2 is a schematic view showing product production lines configured in one example of a factory;
FIG 3 is an external view of one example of a product produced in a product production line;
FIG 4 is a block diagram schematically depicting a configurational aspect of a management computer, and the devices connected to the management computer;
FIG 5 is a schematic view of the general configuration of a combination weighing machine;
FIG 6 is a schematic view of the general configuration of a bag-making and packaging machine;
FIG 7 is a is a schematic view showing a boxing device in planar fashion;
FIG 8 is a schematic view roughly showing a configurational aspect of a case-making section;
FIG 9 is a schematic view roughly showing a configurational aspect of a boxing section;
FIG 10 is a block diagram schematically depicting some of the functional parts included in a management server;
FIG 11 is a schematic view showing one example of a device information table;
FIG 12 is a schematic view showing one example of a grouping table; and
FIG 13 is a schematic view showing the manner in which image information (maintenance information) is displayed in a display part of a device that has received maintenance information.

### DESCRIPTION OF EMBODIMENTS

Below is a description, made with reference to the drawings, of a device management system 100 according to one embodiment in of the present invention. The following embodiment is a specific example of the present invention and is not intended to limit the technical range of the present invention, and changes can be made as appropriate within a range that does not deviate from the scope of the invention.

### (1) Summary of device management system 100

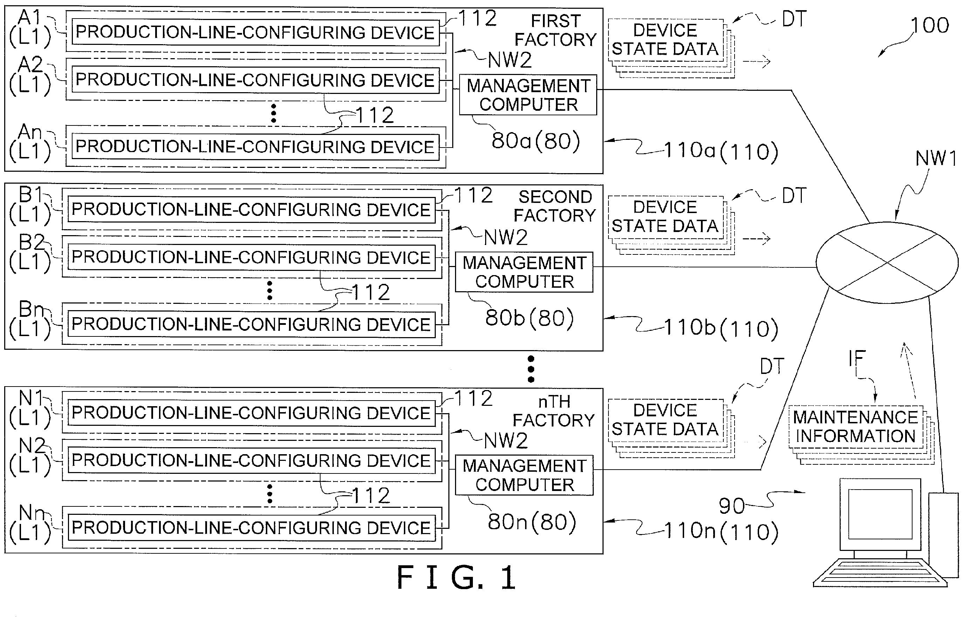

FIG 1 is a schematic view roughly showing a configuration of a device management system 100 according to one embodiment of the present invention. In a factory where production lines that produce products (product production lines L1) have been configured, the device management system 100 collects data (device state data DT) specifying the states of production-line-configuring devices from a plurality of devices (production-line-configuring devices 112) that configure a product production line, and the system accumulates and analyzes this data, thereby extracting signs of degradation of the devices (malfunction or deterioration in capabilities due to degradation over time), adjustment anomalies, and/or maintenance periods, and outputting maintenance information IF as appropriate.

The device management system 100 is mainly configured by having a management server 90 and management computers 80 (80a, 80b, ... 80n) that are installed in a plurality of factories 110 (first factory 110a, second factory 110b, ... nth factory 110n) be connected via a communication network (wide area network NW1). In each of the factories 110, a plurality of product production lines L1 that produce products are configured, and a plurality of production-line-configuring devices 112 that configure the product production lines L1 are electrically connected with the management computers 80 via a local communication network (local network NW2).

Specifically, product production lines A1, A2, ... and An are configured in the first factory 110a, product production lines B1, B2, ... and Bn are configured in the second factory 110b, and product production lines N1, N2, ... and Nn are configured in the nth factory 110n.

The management computers 80 are general-purpose computers configured from a CPU, a memory, and/or the like. Applications needed for transmitting/receiving data to and from the management server 90 are installed on the management computers 80.

The wide area network NW1 is a wide area network (WAN) constructed using public circuits and/or dedicated circuits. The local network NW2 is a local area network (LAN) configured using a hub, and/or the like.

### (2) Product production lines L1

The product production lines L1 configured in the factories 110 are described below. In the following description, the product production line L1 configured in the first factory 110a is used as an example, but similar product production lines L1 are configured in the other factories 110 (the second factory 110b to the nth factory 110n) as well. Appropriate selections and changes can be made for each factory as to configurational aspects of commodity manufacturing lines L2 (described hereinafter), and as to the type of commodities C manufactured and supplied in the commodity manufacturing lines L2.

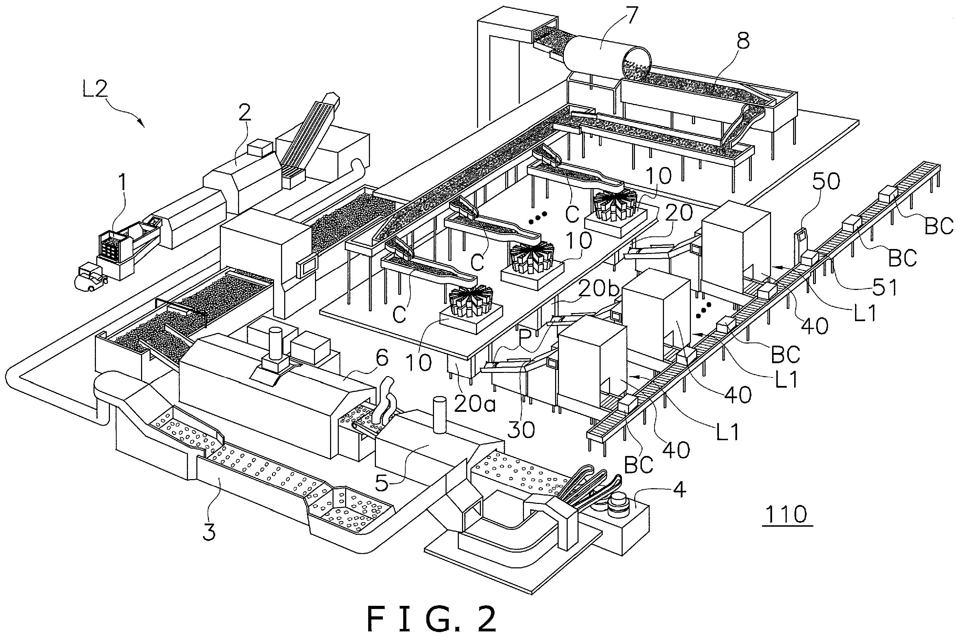

FIG 2 is a schematic view showing the product production lines L1 configured in the first factory 110a. In the first factory 110a, a plurality of product production lines L1 (A1, A2, ... and An) are configured as shown in FIG 2. Each of the product production line L1 is connected to a commodity manufacturing line L2, which manufactures and supplies the commodities C.

In the first factory 110a, potato chips are manufactured as the commodities C in the commodity manufacturing line L2, and the manufactured potato chips are supplied in the product production lines L1. In the commodity manufacturing line L2 in the first factory 110a, mainly, a crate dumper 1, a peeler 2, an inspection table 3, a slicer 4, a blancher 5, a fryer 6, a flavoring device 7, and a fastback 8 are linked and installed in the order listed.

Potatoes, the starting material for potato chips, are carried in crates to the commodity manufacturing line L2. The crate dumper 1 receives the crates containing potatoes, takes the potatoes out of the crates, and carries the potatoes to the peeler 2. The crate dumper 1 washes the potatoes with water and removes mud and gravel adhering to the potatoes.

While the potatoes are washed with water, the peeler 2 peels away the skins. The peeled potatoes are carried to the inspection table 3.

On the inspection table 3, the state of the potatoes is confirmed by people, and any abnormal potatoes are removed from the manufacturing line. Potatoes that have left the inspection table 3 are carried to the slicer 4.

The slicer 4 slices the peeled potatoes to a certain thickness and washes away starchiness on the potato surfaces with water. The sliced potatoes are carried to the blancher 5.

The blancher 5 washes away sugar contents on the surfaces of the sliced potatoes, and carries the potatoes to the fryer 6.

The fryer 6 has a tank of oil for deep-frying the sliced potatoes. Some oil in the tank is lost by evaporating and/or by being absorbed by the potatoes, but oil is added as appropriate by automatic control of a valve in a separate tank filled with oil for replenishing. The amount of oil in the tank is thereby kept within a certain range. Fried potatoes are carried to the flavoring device 7.

The flavoring device 7 flavors the fried potatoes with seasoning powder. The flavoring device 7 has a tank of seasoning powder, and a suitable amount of the seasoning powder is added to the fried potatoes by automatic control of a valve. The flavor of the potato chips is thereby kept to a certain quality. Potato chips that have left the flavoring device 7 are carried to the fastback 8.

The fastback 8 is connected to upstream-side end parts of the product production lines L1, and the fastback 8 carries the potato chips (commodities C) to the product production lines L1. The potato chips are dropped from a terminal end of the fastback 8 and loaded into combination weighing machines 10 of the product production lines L1.

Each of the product production lines L1 mainly has, as production-line-configuring devices 112, a combination weighing machine 10, a bag-making and packaging machine 20, a seal checker 30, and a boxing device 40.

The combination weighing machine 10 is a device that continuously receives commodities C, performs combination weighing of the potato chips, and supplies the commodities C individually at a predetermined weight to the bag-making and packaging machine 20.

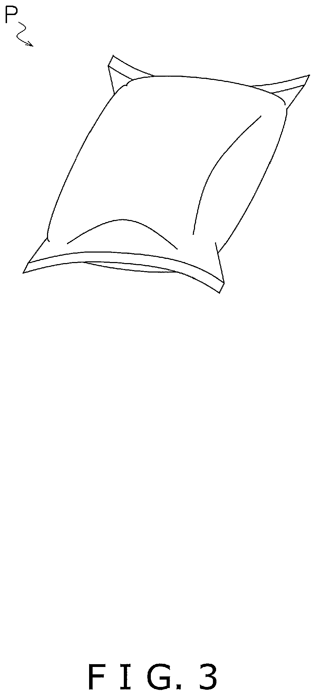

The bag-making and packaging machine 20 is a device that bags supplied commodities C individually at a predetermined weight to create a product P such as that shown in FIG 3. The bag-making and packaging machine 20 sends the product P to the seal checker 30. The product P is the commodities C (a predetermined weight of potato chips in this embodiment) packaged in a film 201. The product P has sealed parts formed in an upper side and lower side of the product P.

The seal checker 30 inspects the appropriateness of the sealed state of a bag of products P. Products P that have left the seal checker 30 are carried to a sorting mechanism (not shown). The sorting mechanism, in accordance with the results of the inspection performed by the seal checker 30, sorts satisfactory products to a regular line conveyor and defective products to a defective recovery conveyor (not shown). The boxing device 40 is arranged ahead of the regular line conveyor.

The boxing device 40 boxes products P into a cardboard box BC at a predetermined numerical quantity at a time, the packed cardboard box BC is sealed, and the sealed cardboard box BC is carried to the weight checker 50.

The products P produced in the product production lines L1 are sent to the weight checker 50 arranged downstream.

The weight checker 50 inspects whether or not the weights of the sealed cardboard boxes BC are within a proper range. The weight checker 50 includes a carrying conveyor 51, a load cell (not shown), and a control part (control part 50A) to control the actions of the weight checker 50. The carrying conveyor 51 carries the products P sent from the boxing device 40 toward the downstream side. The load cell measures the weight of a cardboard box BC (a box in which a plurality of products P have been packaged) carried in on the carrying conveyor 51. The control part 50A determines, on the basis of an output signal of the load cell, whether or not the weight of the cardboard box BC is within a proper range. A cardboard box BC determined to be within the proper range is designated for shipment. A cardboard box BC determined to be outside of the proper range is sorted to a defective recovery conveyor (not shown) by a sorting mechanism (not shown) arranged further downstream.

### (3) Management computers 80

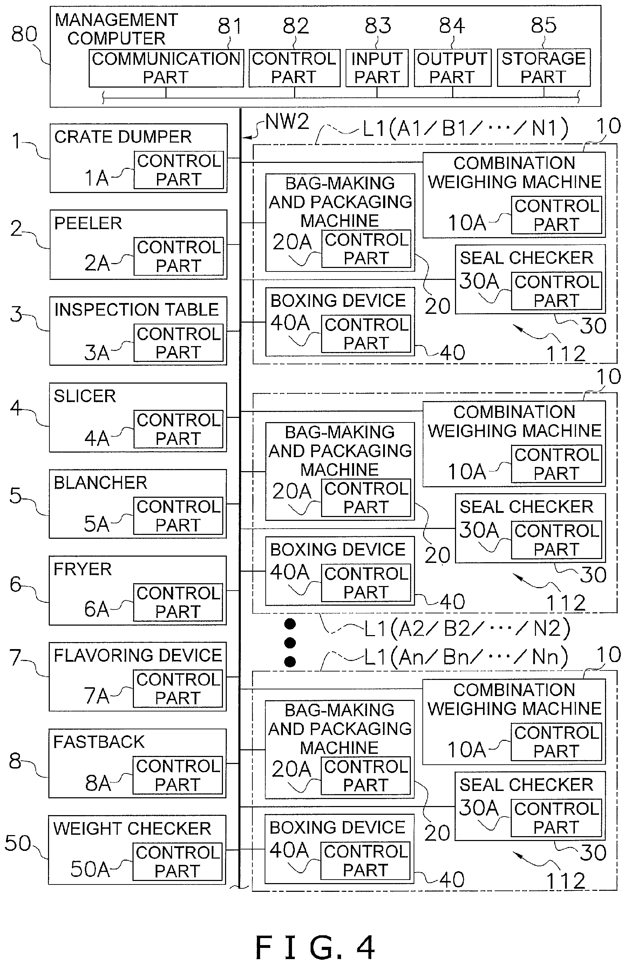

Installed in the factories 110 are management computers 80 to control the actions of the product production lines L1 and the commodity manufacturing line L2. FIG 4 is a block diagram schematically depicting a configurational aspect of a management computer 80, and the devices connected to a management computer 80. Each of the management computers 80 is a general-purpose computer having a communication part 81, a control part 82, an input part 83, an output part 84, and a storage part 85, as shown in FIG 4.

The communication part 81 is an interface to connect the management computer 80 to communication networks (the wide area network NW1 and the local network NW2). The control part 82 is configured from a CPU, a ROM, a RAM, and/or the like, and the control part 82 controls the actions of the management computer 80 by reading and executing programs in the storage part 85. The input part 83 is configured from a mouse, a keyboard, and/or the like. The output part 84 is configured from a liquid crystal display, a speaker, and/or the like. The storage part 85 is configured from a hard disk, and/or the like. The storage part 85 stores programs for controlling the actions of the management computer 80, and the device state data DT specifying the states of the production-line-configuring devices 112.

The management computer 80 is connected, via a communication network (the local network NW2) constructed within the factory 110, to microcomputers (specifically, a control part 1A of the crate dumper 1, a control part 2A of the peeler 2, a control part 3A of the inspection table 3, a control part 4A of the slicer 4, a control part 5A of the blancher 5, a control part 6A of the fryer 6, a control part 7A of the flavoring device 7, a control part 8A of the fastback 8, and a control part 50A of the weight checker 50) of devices included in the commodity manufacturing line L2. The management computer 80 monitors and controls the actions of the devices 1 to 8 and 50.

The management computer 80 is also electrically connected, via the local network NW2, to each of the microcomputers (specifically, the control part 10A of the combination weighing machine 10, the control part 20A of the bag-making and packaging machine 20, the control part 30A of the seal checker 30, and the control part 40A of the boxing device 40) of the production-line-configuring devices 112 included in the product production lines L1. The management computer 80 monitors and controls the actions of the production-line-configuring devices 112 (10, 20, 30, and 40). The management computer 80 periodically acquires and accumulates device state data DT from the production-line-configuring devices 112 being managed. The management computer 80 periodically transmits, to the management server 90, untransmitted device state data DT held within the management computer 80.

### (4) Summary of devices included in product production line 112

### (4-1) Combination weighing machine 10

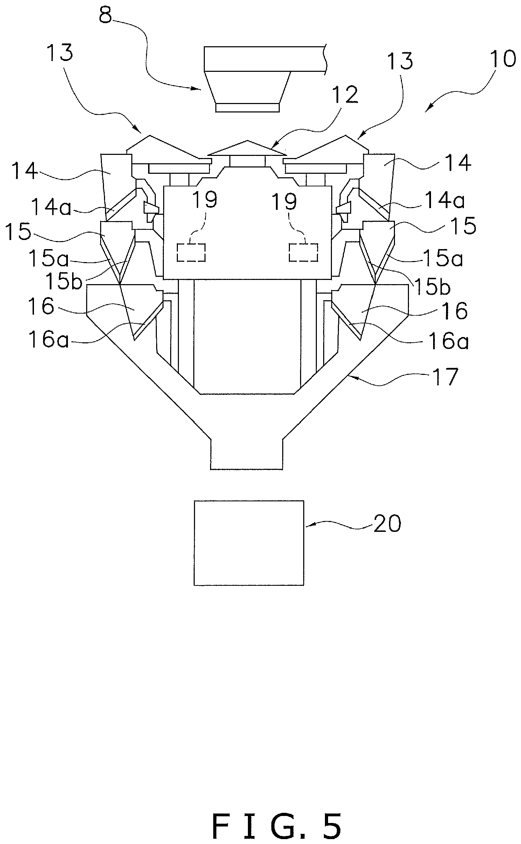

FIG 5 is a schematic view of the general configuration of a combination weighing machine 10. As shown in FIG 5, the combination weighing machine 10 includes a scattering table 12, a plurality of supply feeders 13 arranged in a circle around the periphery of the scattering table 12, a plurality of pool hoppers 14 arranged below the supply feeders 13, a plurality of weighing hoppers 15 arranged below the pool hoppers 14, a plurality of booster hoppers 16 arranged below the weighing hoppers 15, a gathering and discharging chute 17 arranged below the booster hoppers 16, a plurality of load cells 19 to measure the weight of the commodities C accumulated in the weighing hoppers 15, and a control part 10A to control the actions of the combination weighing machine 10. The supply feeders 13, the pool hoppers 14, the weighing hoppers 15, the booster hoppers 16, and the load cells 19 are the same in number.

The scattering table 12 is caused to rotate by a rotation device (not shown). Commodities C that have fallen from the fastback 8 onto the scattering table 12 scatter and fall onto the supply feeders 13 due to the rotation of the scattering table 12.

The supply feeders 13 are caused to vibrate by an electromagnetic vibration device (not shown). The supply feeders 13 receive the commodities C from the scattering table 12, and by vibrating, cause the received commodities C to move outward and fall into the pool hoppers 14.

The pool hoppers 14 temporarily pool the commodities C falling from the supply feeders 13. Gates 14a to open and close discharge ports in lower parts of the pool hoppers 14 are provided thereto. When the gates 14a open, the commodities C in the pool hoppers 14 fall into the downstream weighing hoppers 15.

The weighing hoppers 15 are arranged directly beneath the gates 14a, and the weighing hoppers temporarily accumulate commodities C falling from the pool hoppers 14. First gates 15a and second gates 15b to open and close discharge ports in lower parts of the weighing hoppers 15 are provided thereto. When the first gates 15a open, the commodities C in the weighing hoppers 15 fall into the downstream gathering and discharging chute 17. When the second gates 15b open, the commodities C in the weighing hoppers 15 fall into the downstream booster hoppers 16.

The load cells 19 measure the weight of the commodities C in the weighing hoppers 15.

The booster hoppers 16 are arranged directly beneath the second gates 15b, and the booster hoppers temporarily accumulate the weighed commodities C falling from the weighing hoppers 15. Gates 16a to open and close discharge ports in lower parts of the booster hoppers 16 are provided thereto. When the gates 16a open, the commodities C in the booster hoppers 16 fall into the gathering and discharging chute 17.

The gathering and discharging chute 17 guides the commodities C falling from the weighing hoppers 15 or the booster hoppers 16 to the bag-making and packaging machine 20.

The control part 10A stores a weight value of the commodities C existing in the current weighing hopper 15 in correlation with that weighing hopper 15. The control part 10A stores a weight value of the commodities C existing in the current booster hopper 16 in correlation with that booster hopper 16. On the basis of the weight values of the commodities C correlated with the individual weighing hoppers 15 and the individual booster hoppers 16, the control part 10A performs a combination calculation and selects some of hoppers 15 and 16. The combination calculation involves totaling weight values of the commodities C in the individual hoppers 15 and 16 in various combinations, and calculating combinations of hoppers 15 and 16 such that the total values fall within a predetermined range.

As a result of the combination calculation, when a number of hoppers 15 and 16 are selected, the gates 15a and 16a to open and close the discharge ports of the selected hoppers 15 and 16 are opened, and the commodities C in those hoppers 15 and 16 are discharged into the gathering and discharging chute 17. The emptied hoppers 15 and 16 are then sequentially refilled with new commodities C from the hoppers 14 and 15 thereover.

As described above, a predetermined weight of commodities C gathers in the gathering and discharging chute 17. The commodities C that have gathered slide down in gathering and discharging chute 17 and supplied to the bag-making and packaging machine 20, which is arranged directly beneath a discharge port of the gathering and discharging chute 17.

### (4-2) Bag-making and packaging machine 20 (packaging device)

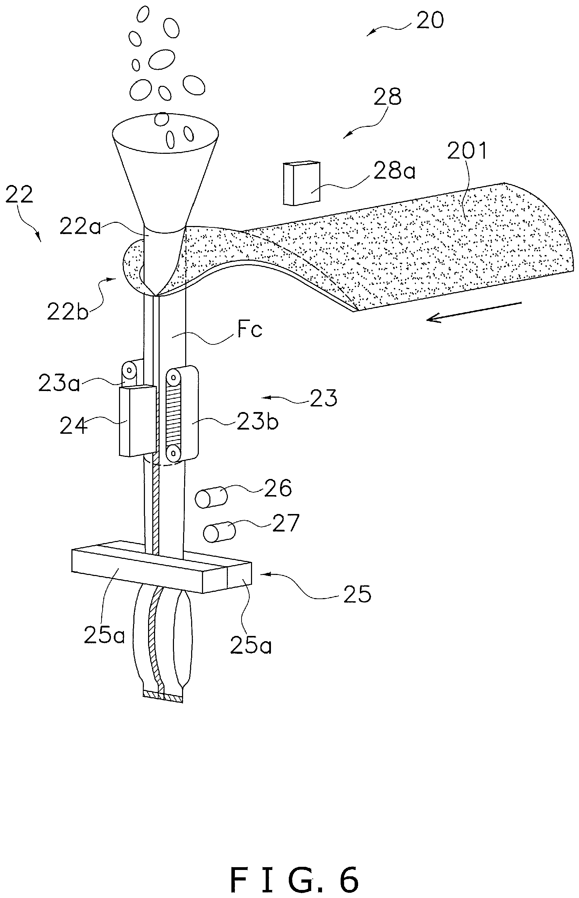

FIG 6 is a schematic view of the general configuration of the bag-making and packaging machine 20. As shown in FIG 6, the bag-making and packaging machine 20 includes a film supply mechanism (not shown) having a film roll, a forming mechanism 22 to form a sheet-form film 201 unreeled from the film supply mechanism into a cylindrical shape, a carrying mechanism 23 to downwardly carry the film 201 formed into a cylindrical shape (referred to below as a cylindrical film Fc) by the forming mechanism 22, a vertical sealing mechanism 24 to vertically seal overlapping portions of the cylindrical film Fc, a lateral sealing mechanism 25 to laterally seal portions of the cylindrical film Fc that become upper and lower ends of a bag, an air sealing mechanism 26 to seal air into the bag, an inert gas sealing mechanism 27 to seal an inert gas into the bag, a printing mechanism 28 to print label information on a portion of the sheet-form film 201 that becomes a label area of the bag, and the control part 20A to control the actions of the bag-making and packaging machine 20.

The forming mechanism 22 has a tube 22a and a former 22b. The tube 22a is a cylindrical member, made to extend in the vertical direction, open at upper and lower ends, and fixed to the former 22b. Commodities C falling in a predetermined weight at a time from the combination weighing machine 10 are loaded into the upper-end opening of the tube 22a. The former 22b is arranged so as to encircle the upper-end area of the tube 22a. The sheet-form film 201 being sent from the film supply mechanism is wrapped around an outer surface of the tube 22a while passing through a gap between the former 22b and the tube 22a, and is formed into a cylindrical shape.

The carrying mechanism 23 has a pair of pull-down belts 23a and 23b. The pull-down belts 23a and 23b are bilaterally symmetric about the tube 22a as a reference. The pull-down belts come into contact with the cylindrical film Fc wrapped around the tube 22a and carry the cylindrical film Fc downward while suction-holding the film. The pull-down belts 23a and 23b are endless belts would around driving rollers arranged at the upper end and the lower end. The pull-down belts 23a and 23b have corresponding servo motors (pull-down motors) as drive sources, and revolve in conjunction with the driving of the pull-down motors.

More specifically, a timing belt (not shown) is wound around a drive shaft of the driving roller of the pull-down belt 23a and a drive shaft of the driving roller of the pull-down belt 23b. Motive power transferred from the pull-down motor to the drive shaft of the pull-down belt 23a is transferred to the drive shaft of the pull-down belt 23b via the timing belt. The drive shaft of the pull-down belt 23b thereby also rotates along with the rotation of the drive shaft of the pull-down belt 23a. Specifically, the pull-down belt 23b is configured so as to revolve in conjunction with the pull-down belt 23a at the same speed as the pull-down belt 23a.

Due to this, roughly uniform carrying force is exerted on the cylindrical film Fc carried along the tube 22a from both the left and right sides with the carrying direction as a reference, and the film 201, without straining or tearing in the carrying process, comes to be fashioned into a bag with the square tube shape neatly maintained.

The vertical sealing mechanism 24 is arranged so as to extend in the vertical direction along the tube 22a. The vertical sealing mechanism 24 has a heater and a steel belt (seal surface) heated by the heater. The vertical sealing mechanism 24 thermally seals vertically extending and overlapping portions of the cylindrical film Fc wrapped around the tube 22a, while pushing these portions against the outer surface of the tube 22a at a certain pressing force through the seal surface. The steel belt revolves around the heater, and the vertical sealing mechanism 24 continually heat-fuses both side edges of the cylindrical film Fc wound around a vertical sealing cylinder while pushing the edges against the vertical sealing cylinder, thus performing vertical sealing at the joints of the cylindrical film Fc.

The lateral sealing mechanism 25 is arranged below the tube 22a, and this mechanism has a pair of seal jaws 25a. Each of the seal jaws 25a has a heater and a steel belt (seal surface) heated by the heater. While pivoting at the proper timing, the seal jaws 25a move in a horizontal direction toward and away from each other, and perform an action of sandwiching the cylindrical film Fc through the seal surfaces. The portion of the cylindrical film Fc sandwiched by the seal surfaces is thermally sealed along the lateral direction. The cylindrical film Fc is thereby formed into a bag shape. Additionally, a knife is driven by air pressure from a knife cylinder housed within one seal jaw 25a, whereby the laterally sealed portion is cut in the lateral direction, and the preceding bag and following bag are cut apart. After this lateral seal is made, clumps of commodities C fall from the combination weighing machine 10 through the tube 22a.

The air sealing mechanism 26 is arranged in proximity to the lateral sealing mechanism 25. The air sealing mechanism 26 seals air within the cylindrical film Fc immediately before the cylindrical film Fc is laterally sealed, in order to maintain a certain amount of swelling in the bag sealed by the lateral seal.

The inert gas sealing mechanism 27 is disposed in proximity to the lateral sealing mechanism 25. The inert gas sealing mechanism 27 seals an inert gas (nitrogen gas) within the cylindrical film Fc immediately before the cylindrical film Fc is laterally sealed, in order to prevent degradation of the commodities C in the bag sealed by the lateral seal.

The printing mechanism 28 is arranged near a location where the film 201 is carried in planar fashion between the film supply mechanism and the forming mechanism 22. The printing mechanism 28 has a print head 28a. The print head 28a moves back and forth between a basic position of maintaining a certain distance from the film 201, and a printing position of coming into contact with the film 201. When in the printing position, the print head 28a prints label information on the film 201. The timing of the back-and-forth movement of the print head 28a is controlled by the control part 20A so that the print head 28a, when in the printing position, reliably comes into contact with the portion of the film 201 that will be the label area of the bag. Specifically, a printing pitch is corrected as appropriate by the control part 20A.

### (4-3) Seal checker 30

The seal checker 30 applies pressure along a thickness direction of the bag of products P carried from the bag-making and packaging machine 20, detects the thickness of the bag during pressure application, and on the basis of the thickness, determines whether the bag is hermetically sealed. The seal checker 30 has a servo motor to move a pressing member toward and away from the carrying conveyor, and a thickness sensor to detect the thickness of the bag according to angular displacement of the servo motor (not shown). The seal checker 30 has a control part 30A to determine, on the basis of an output signal from the thickness sensor, whether the thickness of the bag is within a predetermined range (i.e., whether a proper seal has been made by the vertical sealing mechanism 24 or the lateral sealing mechanism 25). The seal checker 30 sorts products P which is determined by the control part 30A to be outside of the predetermined range to a defective recovery conveyor (not shown), as defectives in which a defective seal has caused air to leak from the bag or the bag to contain too much or too little air.

### (4-4) Boxing device 40

The boxing device 40 sequentially receives products P that have passed the inspection made by the seal checker 30 (i.e., products P discharged from the bag-making and packaging machine 20). The boxing device 40 aligns a predetermined number of products P into a group of products (a product group G). The boxing device 40 also makes a case from a sheet member for case-making, and manufactures a cardboard box BC. A predetermined number of tiers of product groups G are packed into the manufactured cardboard box BC, and after being sealed shut, a fully packed cardboard box BC is sent to a downstream device (the weight checker 50 in this embodiment).

The term "tier" used here refers to a layer stacked within the cardboard box BC. For example, three tiers are stacked in a cardboard box BC that has completely passed through the boxing step, each tier having four products P.

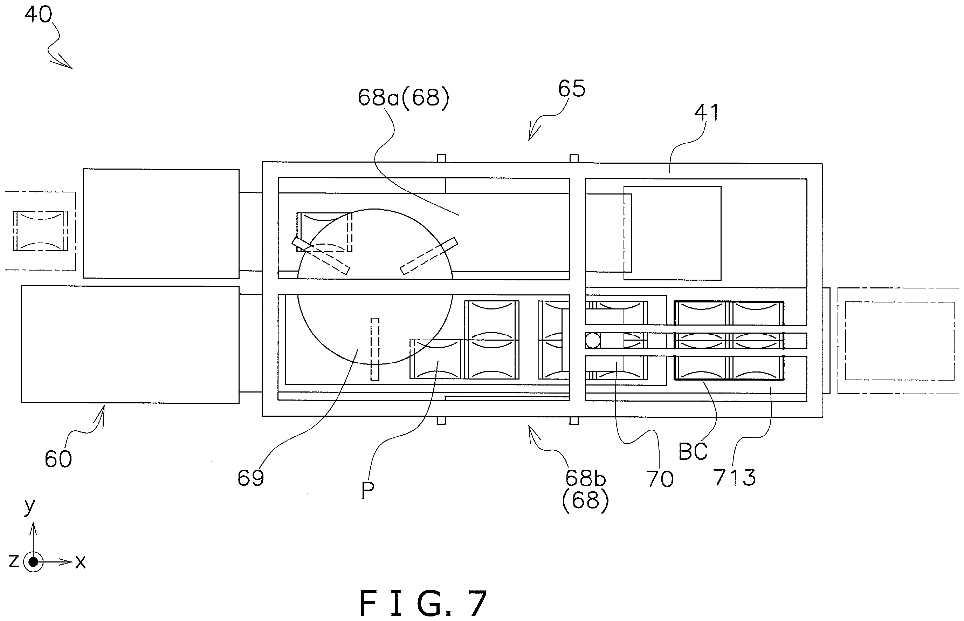

FIG 7 is a schematic view showing the boxing device 40 in planar fashion. The boxing device 40 has, inside a frame 41 configuring the contours, a case-making section 60 to make the cardboard boxes BC, and a boxing section 65 to box products P into a made cardboard box BC.

### (4-4-1) Case-making section 60

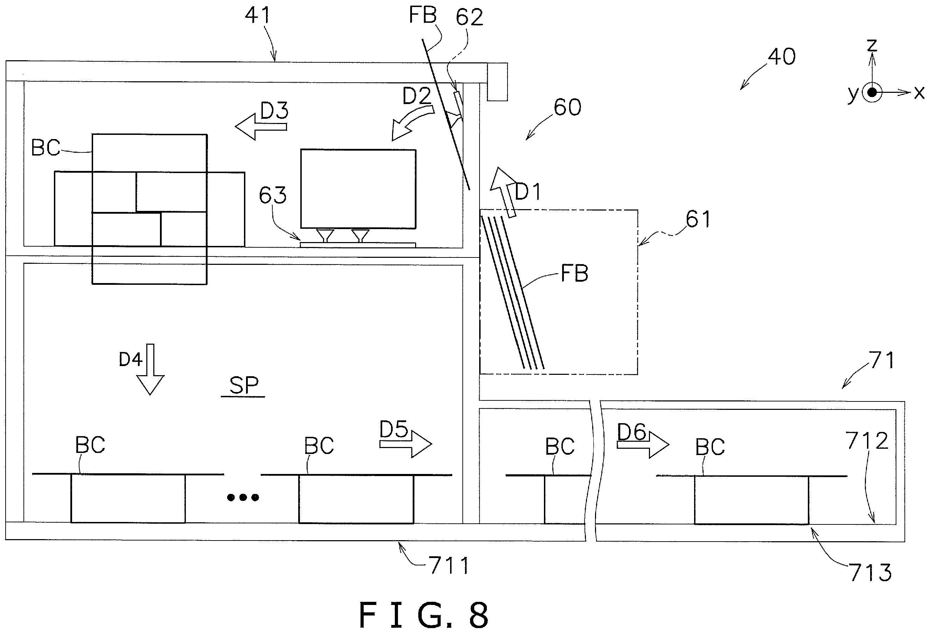

FIG 8 is a schematic view roughly showing a configurational aspect of the case-making section 60. The case-making section 60 unfolds a case-making sheet FB, which includes a plurality of flaps, and makes a cardboard box BC. The case-making section 60 mainly includes a sheet-stacking mechanism 61, a transferring mechanism 62, and a case-making mechanism 63.

The sheet-stacking mechanism 61 stacks a large number of case-making sheets FB (see FIG 8). In the transferring mechanism 62, a leading case-making sheet FB, from among the plurality of case-making sheets FB stacked on the sheet-stacking mechanism 61, is pulled away from a trailing case-making sheet FB by a pulling suction disk, and is transferred upward and delivered to the case-making mechanism 63 (see arrow D1 in FIG 8).

The case-making mechanism 63 deforms the case-making sheet FB delivered from the transferring mechanism 62 from flat to tubular (see arrow D2 in FIG 8). The case-making mechanism 63 then shapes the cardboard box BC by creating a bottom cover in the case-making sheet FB deformed into a tube shape (see arrow D3 in FIG 8). The case-making mechanism 63 affixes adhesive tape for maintaining the shape of the cardboard box BC to the bottom cover, and causes the tape to move downward (see arrow D4 in FIG 8).

### (4-4-2) Boxing section 65

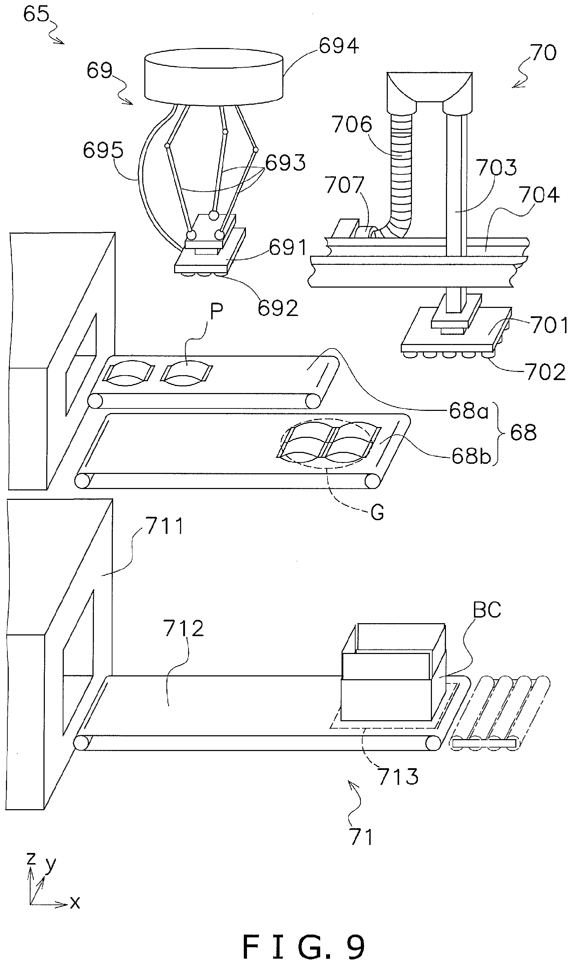

FIG 9 is a schematic view roughly showing a configurational aspect of the boxing section 65. The boxing section 65 is a unit to align a plurality of products P carried from a device upstream (the seal checker 30 in this embodiment), to box the products into cardboard boxes BC, and to deliver the boxes to a device downstream (the weight checker 50 in this embodiment).

The boxing section 65 has a product-carrying conveyor 68a, a product-accumulating conveyor 68b, a product-accumulating mechanism 69, a product group movement mechanism 70, and a box-handling section 71.

The product-carrying conveyor 68a and the product-accumulating conveyor 68b are arranged parallel to each other, and these conveyors carry products P in a carrying direction X, which leads from an upstream end toward a downstream end. Products P sent from a device upstream (the seal checker 30 in this embodiment) are sent on the product-carrying conveyor 68a.

The product-accumulating mechanism 69 is a mechanism for accumulating a plurality of products P and creating a product group G in cooperation with the product conveyor 68. Specifically, the product-accumulating mechanism 69 lifts up one product P at a time placed on the product-carrying conveyor 68a, and accumulates the products on the product-accumulating conveyor 68b. FIG 9 shows an aspect of accumulating a two-dimensionally aligned product group G Alternatively, the product-accumulating mechanism 69 can create a product group G by accumulating products P in an aspect of partially overlapping and being aligned in one row, or in various other aspects.

The product-accumulating mechanism 69 is configured from, for example, a parallel link robot, and is fixed to the frame 41. The product-accumulating mechanism 69 includes an accumulating head 691, a plurality of accumulating suction-holding tools 692, three arms 693, a servo mechanism 694, and a suction tube 695.

The servo mechanism 694, through the use of the arms 693, three-dimensionally moves or rotates the accumulating head 691. The plurality of accumulating suction-holding tools 692 are provided to the accumulating head 691. The suction tube 695 causes internal spaces of the accumulating suction-holding tools 692 to communicate with a vacuum pump (not shown). The vacuum pump suctions in air when the accumulating suction-holding tools 692 adhere firm to a product P, whereby the accumulating head 691 can lift up one product P.

The product group movement mechanism 70 is a mechanism for lifting up and boxing a product group G into the cardboard box BC. The product group movement mechanism 70 is configured from a robot and is fixed to the frame 41. The product group movement mechanism 70 includes a packing head 701, packing suction-holding tools 702, a mast 703, a movement guide 704, a flexible hose 706, and a pump suction port 707.

The movement guide 704 has a motor (not shown) and can move the mast 703 in an x-axis direction or a z-axis direction. Specifically, the packing head 701 provided to a tip of the mast 703 can move in an xz plane. The packing head 701, which is larger than the accumulating head 691, is provided with a large number of packing suction-holding tools 702, and is able to lift up all at once a plurality of products P configuring a product group G Internal spaces of the packing suction-holding tools 702 communicate with a vacuum pump (not shown) through the interior of the mast 703, the flexible hose 706, and the pump suction port 707. The vacuum pump suctions in air when the packing suction-holding tools 702 adhere firm to the product group G, whereby the packing head 701 can collectively lift up the product group G all at once.

The box-handling section 71 has the stocking section 711, a box-carrying conveyor 712, and a packing section 713.

The stocking section 711 is configured from the frame 41, a stocking space SP being formed inside. The stocking space SP is formed to a size in which a plurality (for example, five) of cardboard boxes BC can be stocked (held in standby).

The box-carrying conveyor 712 carries the cardboard boxes BC in the stocking space SP to the packing section 713 at a predetermined timing, on the basis of the condition of the boxing action.

The packing section 713 is a portion on which are placed cardboard boxes BC that are sent from the stocking space SP and that are to undergo the boxing action. Specifically, the packing section 713 is a portion on the surface of the box-carrying conveyor 712 that is nearer the downstream end than the product-accumulating conveyor 68b and that is positioned below the product group movement mechanism 70.

In the boxing action, a product group G is packed all at once by the product group movement mechanism 70 into a cardboard box BC placed on the packing section 713. After the packing of one cardboard box BC has been repeated a number of times in the boxing action, the box-carrying conveyor 712 moves the cardboard box BC that has undergone the boxing action and delivers the box to a conveyor downstream. Additionally, when the next boxing action is performed, the box-carrying conveyor 712 sends a cardboard box BC stocked in the stocking space SP to the packing section 713.

### (4-4-3) Action of boxing device 40

The boxing device 40 performs the case-making action for cardboard boxes BC in the case-making section 60. In the case-making action, the boxing device 40 delivers one case-making sheet FB at a time from the sheet-stacking mechanism 61 to the case-making mechanism 63, and a cardboard box BC is shaped by the case-making mechanism 63. The boxing device 40 then sends the cardboard box BC to the stocking section 711, and the box is held in standby with the upper part kept open in the stocking space SP.

In the boxing device 40, a boxing action is performed to pack into a cardboard box BC a predetermined numerical quantity of products P sent one at a time from a device upstream (the seal checker 30 in this embodiment).

In the boxing action, the boxing device 40 causes the products P to be carried one at a time by the product-carrying conveyor 68a, and causes products to be accumulated on the product-accumulating conveyor 68b and aligned as a product group G by the product-accumulating mechanism 69. Additionally, the boxing device 40, through the box-carrying conveyor 712, sends a cardboard box BC stocked in the stocking space SP to the packing section 713. The boxing device 40, through the product group movement mechanism 70, lifts up the product group G all at once and boxes the product group G into the cardboard box BC placed on the packing section 713. The boxing device 40 repeats this packing a number of times in accordance with the numerical quantity (number of tiers) of products packed into the cardboard box BC, which has been set in advance.

The boxing device 40 then, through the box-carrying conveyor 712, delivers the cardboard box BC, in which the predetermined numerical quantity of products P has been packed, to a device downstream (the weight checker 50 in this embodiment). Additionally, when the next boxing action is performed with the supplied products, the box-carrying conveyor 712 sends a cardboard box BC stocked in the stocking space SP to the packing section 713.

### (5) Management server 90

The management server 90 is a computer including a RAM, a ROM, a hard disk, and other types of memory, and a CPU. The management server 90 is located in a remote location apart from the factories 110 (the production-line-configuring devices 112). The management server 90 periodically acquires and accumulates device state data DT from the management computers 80. The management server 90 analyzes the accumulated data, and in accordance with the result of the analysis, outputs information that prompts maintenance (maintenance information IF) to a specific factory 110 or production-line-configuring device 112.

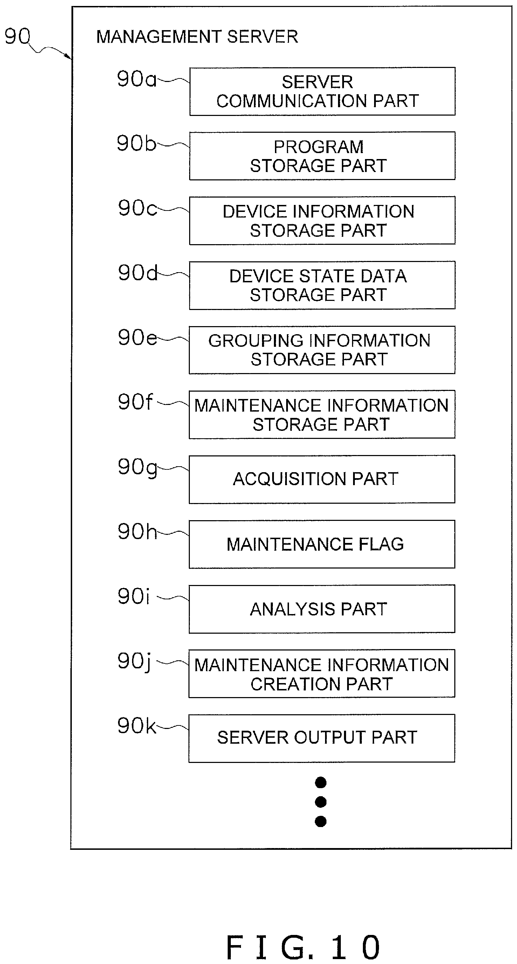

FIG 10 is a block diagram schematically depicting some of the functional parts included in the management server 90. The management server 90 mainly includes a server communication part 90a, a program storage part 90b, a device information storage part 90c, a device state data storage part 90d, a grouping information storage part 90e, a maintenance information storage part 90f, an acquisition part 90g, a maintenance flag 90h, an analysis part 90i, a maintenance information creation part 90j, a server output part 90k, and other functional parts.

### (5-1) Server communication part 90a

The server communication part 90a includes a communication module to perform communication with the management computers 80 via the wide area network NW1. The sending and receiving of signals to and from the management computers 80 is performed via the server communication part 90a.

### (5-2) Program storage part 90b

The program storage part 90b stores control programs that define the processes of the functional parts included in the management server 90. The control programs are updated as appropriate via an input device and/or storage medium (not shown).

### (5-3) Device information storage part 90c

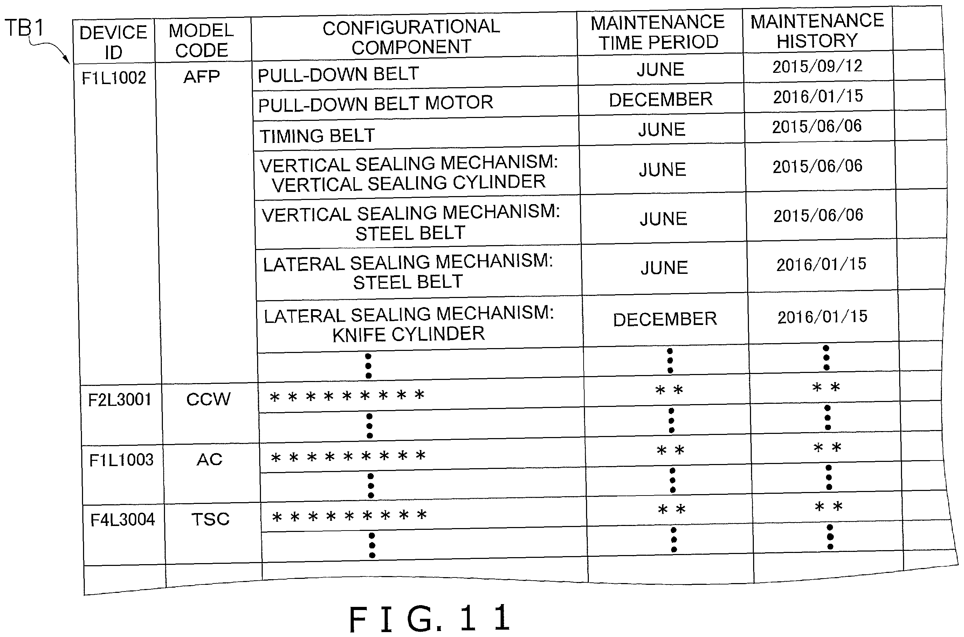

The device information storage part 90c stores identifying information about the production-line-configuring devices 112, and production-line-configuring device information relating to maintenance time periods, maintenance histories, and/or the like. The production-line-configuring device information is updated as appropriate by a manager of the device management system 100, a staff member of a factory 110, or the like. The production-line-configuring device information is stored as a device information table TB1 such as that shown in, for example, FIG 11.

The device information table TB 1 shown in FIG 11 defines information specifying, *inter alia,* device IDs and model codes of the production-line-configuring devices 112 included in the device management system 100, and maintenance time periods and/or maintenance histories set pertaining to configurational components included in the production-line-configuring devices 112.

A device ID is information that uniquely identifies a production-line-configuring device 112. For example, in FIG 11, device IDs are shown as seven alphanumeric characters, the first two characters being a code identifying the installation location (the factory 110), the third and fourth characters being a code identifying the product production line L1 to which the device belongs, and the last three characters being a code assigned to the device.

The model code is the type of production-line-configuring device 112. For example, in FIG 11, "CCW" indicates the combination weighing machine 10, "AFP" indicates the bag-making and packaging machine 20, "TSC" indicates the seal checker 30, and "AC" indicates the boxing device 40.

Maintenance time period of each configurational component is recorded in the device information table TB1. For example, FIG 11 shows that the maintenance time period of a "pull-down belt" of the bag-making and packaging machine 20 is set to "six months. "

Also, the most recent maintenance history of each configurational component is recorded in the device information table TB1. For example, in FIG 11, the information "2015/09/12", which indicates that the most recent maintenance for the "pull-down belt" included in the bag-making and packaging machine 20 having the device ID "F1L1002" was performed on "September 12, 2015.", has recorded.

### (5-4) Device state data storage part 90d (information accumulation part)

Device state data DT sent from the management computers 80 is stored in the device state data storage part 90d. The device state data DT is data specifying the states of the production-line-configuring devices 112. The device state data DT is information specifying (indicating an estimation or prediction of), *inter alia,* the action states, capability values, functional characteristics, adjustment anomalies, degradation over time, or malfunctions of the components included in the production-line-configuring devices 112. More specifically, the device state data DT is data that pertains to each configurational component configuring the production-line-configuring devices 112, and relates to various parameters uses as a basis in detecting signs of degradation or adjustment anomalies.

For example, the parameters "time until auto switch (sensor) reacts after knife driving is started" and "output value from air pressure sensor", which specify signs of degradation or adjustment anomalies of the knife cylinder of the lateral sealing mechanism 25 of the bag-making and packaging machine 20, are equivalent to device state data DT.

As another example, the parameters "time until auto switch (sensor) reacts after vertical sealing mechanism 24 is caused to start action relating to vertical sealing" and "output value from air pressure sensor", which specify signs of degradation or adjustment anomalies of the vertical sealing cylinder of the vertical sealing mechanism 24 of the bag-making and packaging machine 20, are equivalent to device state data DT.

As another example, the parameters "value of encoder pulse for pull-down motor" and "amount of register mark pitch correction", which specify signs of degradation (wear) or adjustment anomalies of the pull-down belt 23a and pull-down belt 23b of the bag-making and packaging machine 20, are equivalent to device state data DT.

As another example, the parameter "value of encoder pulse for pressurizing motor during vertical sealing", which specifies signs of degradation (slackening) or adjustment anomalies of the timing belt of the bag-making and packaging machine 20, is equivalent to device state data DT.

As another example, "load ratio of each motor (servo motor)", which specifies lubrication anomalies, bearing wear, or abnormality in the mechanical state of each sliding part included in the bag-making and packaging machine 20, is equivalent to device state data DT.

The device state data storage part 90d has a capacity sufficient to accumulate device state data DT in an amount proportionate to a predetermined time period (e.g., one year) for each configurational component of the production-line-configuring devices 112 included in the device management system 100.

### (5-5) Grouping information storage part 90e

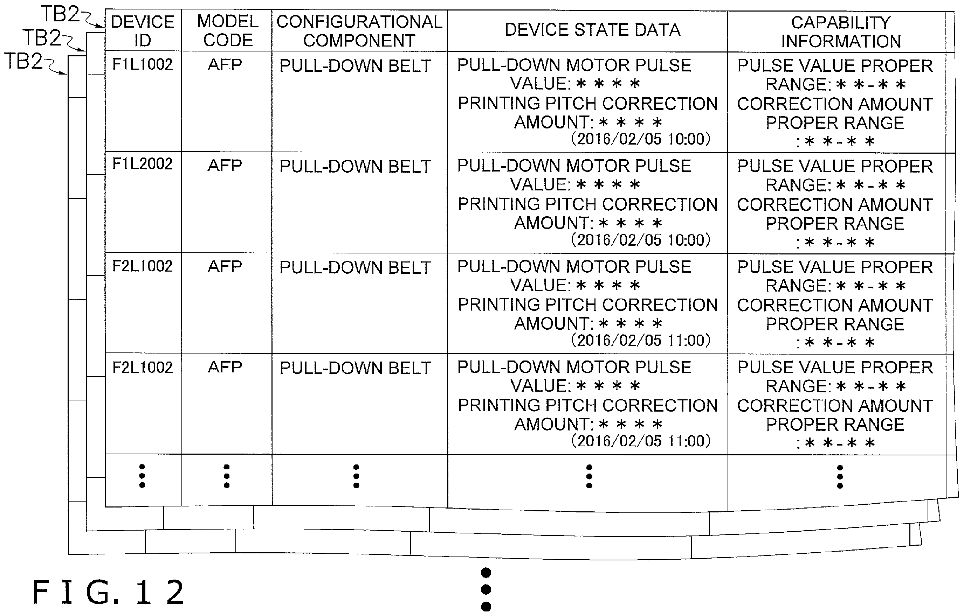

The grouping information storage part 90e stores information (a grouping table TB2) relating to the grouping of the plurality of production-line-configuring devices 112. The grouping table TB2 is information created and updated by the analysis part 90i. FIG 12 is a schematic view showing one example of the grouping table TB2.

The grouping table TB2 is created for each type of production-line-configuring device 112 included in the device management system 100. More specifically, the grouping table TB2 is created for each configurational component included in the same type of production-line-configuring device 112.

FIG 12 shows the grouping table TB2 pertaining to the bag-making and packaging machines 20 included in the device management system 100; this table is as to a grouping for pull-down belts 23a or 23b, which are configurational components.

Specifically, device IDs, model codes, configurational component names, device state data DT, and capability information are registered separately for each specific configurational component of the production-line-configuring devices 112 in the grouping table TB2. The "capability information" in the grouping table TB2 is information including a pre-defined numerical value range, which pertains to a parameter relating to the device state data DT, presumed to be achievable by the normal configurational component. That is, "capability information" in the grouping table TB2 defines capability required in the configurational component.

The grouping information storage part 90e stores a plurality of grouping tables TB2 created for each configurational component in the same type of production-line-configuring device 112.

### (5-6) Maintenance information storage part 90f

The maintenance information storage part 90f stores maintenance information IF created by the maintenance information creation part 90j. The maintenance information IF is information that prompts the user or manager to perform maintenance pertaining to a specific configurational component of a specific production-line-configuring device 112. Or the maintenance information IF is information that notifies the user of the maintenance period pertaining to a specific configurational component of a specific production-line-configuring device 112. The maintenance information IF is created by the maintenance information creation part 90j. The maintenance information IF is, for example, image data displayed in a display part provided to a management computer 80 and/or a production-line-configuring device 112, audio data outputted in an audio output part, or the like.

### (5-7) Acquisition part 90g

The acquisition part 90g is a functional part that acquires device state data DT from the management computers 80. The acquisition part 90g stores the device state data DT sent from the management computers 80 in the device state data storage part 90d.

### (5-8) Maintenance flag 90h

The maintenance flag 90h is a flag for assessing whether or not maintenance is needed for the production-line-configuring devices 112 (more specifically, the configurational components thereof). That is, the maintenance flag 90h is a flag for assessing whether or not a preestablished maintenance opportunity has arrived, or whether or not maintenance is needed because of predetermined signs of degradation, adjustment anomalies, malfunctions, and other abnormalities. The maintenance flag 90h includes a bit number that is the same as the number of configurational components registered in the device information table TB1. Each flag of the maintenance flag 90h corresponds one-to-one with any configurational component.

### (5-9) Analysis part 90i (information analysis part)

The analysis part 90i performs grouping and creates a grouping table TB2 for each of the same model of production-line-configuring device 112 included in the device management system 100. More specifically, the analysis part 90i performs grouping and creates a grouping table TB2 for each of the same type of configurational component included in the production-line-configuring devices 112. When device state data DT is stored anew in the device state data storage part 90d, the analysis part 90i updates the grouping table TB2 on the basis of that device state data DT.

The analysis part 90i also analyzes a variety of information and executes an analysis process to determine whether or not maintenance is needed for the configurational components of the production-line-configuring devices 112 included in the device management system 100.

For example, as an analysis process, the analysis part 90i periodically (e.g., every day) refers to the device information table TB1, and for each configurational component of each production-line-configuring device 112 registered in the device information table TB1, executes a first process to determine whether or not a maintenance opportunity has arrived on the basis of a defined maintenance history and maintenance time period. Specifically, in the first process, when there is a configurational component which a date that results from adding the maintenance time period to a date specified by the maintenance history is earlier than the date of first process execution, the analysis part 90i judges the maintenance opportunity has arrived for that configurational component and sets a corresponding bit of the maintenance flag 90h.

In another example of the analysis process, the analysis part 90i executes a second process to determine whether or not maintenance is needed for each configurational component of each production-line-configuring device 112, on the basis of the contents of the grouping table TB2 that was created or updated. Specifically, in the second process, the analysis part 90i analyzes the state of a specific configurational component that is the subject (the subject component) by comparing the device state data DT (parameter) thereof and the device state data DT (parameter) of another configurational components included in the same grouping table TB2. That is, the analysis part 90i analyzes the state of the subject component by comparing the device state data DT thereof and the device state data DT of another configurational components included in the same group.

In another example of the analysis process, the analysis part 90i executes a third process to determine whether or not maintenance is needed for the configurational components of each production-line-configuring device 112, on the basis of a numerical quantity range defined in the capability information. Specifically, in the third process, the analysis part 90i analyzes a state of a specific configurational component that is the subject (the subject component) by comparing the device state data DT (parameter) thereof and a numerical quantity range defined in the capability information about that subject component.

In the second process or third process, when the parameter relating to the device state data DT of the subject component has a value significantly greater or less than the corresponding parameter of another configurational component, or when this value deviates from the numerical quantity range defined in the capability information, the analysis part 90i determines there to be a large possibility that a sign of degradation, an adjustment anomaly, or any abnormality has occurred in the subject component, and sets a bit of the maintenance flag 90h that corresponds to that configurational component. In other words, in the second process or third process, the analysis part 90i detects the presence or absence of signs of degradation, adjustment anomalies, and/or the like, of the configurational components on the basis of the grouping table TB2. More specifically, the analysis part 90i detects the presence or absence of signs of degradation, adjustment anomalies, and/or the like, of the subject component on the basis of multiple pieces of device state data DT of the configurational components belonging to the same group, or on the basis of the capability information about a subject component.

### (5-10) Maintenance information creation part 90j

The maintenance information creation part 90j periodically refers to the maintenance flag 90h, and when any bit is set, creates maintenance information IF for the configurational component specified by that bit. The maintenance information creation part 90j adds a communication address of a destination device (management computer 80 and/or production-line-configuring device 112) to the created maintenance information IF and stores the information in the maintenance information storage part 90f. After creating the maintenance information IF, the maintenance information creation part 90j clears the bit corresponding to the maintenance flag 90h.

### (5-11) Server output part 90k (maintenance information output part)

When maintenance information IF is stored anew in the maintenance information storage part 90f, the server output part 90k causes that maintenance information IF to be transmitted to the destination device from the server communication part 90a.

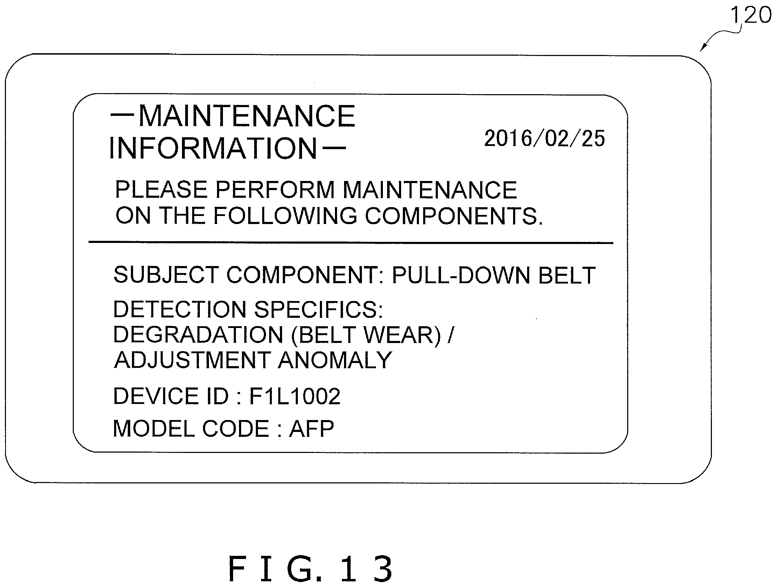

As a result, for example, in the device that has received the maintenance information IF, image information such as that shown in FIG 13 is displayed as maintenance information IF. FIG 13 shows a situation in which, in a display part 120 of the device that has received the maintenance information IF: text information that prompts maintenance, which reads "please perform maintenance on the following component," is displayed; text information specifying the subject component, which reads "subject component: pull-down belt," "device ID: F1L1002," and "model code: AFP," is displayed; and text information indicating the result of the second process or third process, which reads "detection contents: degradation (belt wear)/adjustment anomaly," is displayed.

### (6) Characteristics

### (6-1)

In the device management system 100 according to the present embodiment, decreases in producibility in product production lines is suppressed.

Specifically, in a situation in which a product production line is operating and any device is unable to perform the normally presumed action due to, *inter alia,* degradation over time and/or a malfunction of a component, the production line needs to be stopped and the products can no longer be produced until that device is restored, and producibility decreases. Consequently, it is preferable to perform maintenance on the devices ahead of time in order to suppress the occurrence of such a scenario.

However, because the product production lines involve a variety of circumstances under which the devices are used in accordance with the configurational aspect and operating situation, conventionally, it has been difficult to ascertain the timing of maintenance for the devices, and it has been difficult to suppress producibility decreases in association with the scenario described above.

The device management system 100 according to the present embodiment has a device state data storage part 90d to accumulate device state data DT pertaining to the configurational components of the production-line-configuring devices 112, an analysis part 90i to perform an analysis process of analyzing the device state data DT accumulated in the device state data storage part 90d, and a server output part 90k to output maintenance information IF pertaining to maintenance of the components on the basis of the result of the analysis process.

Due to this, as pertains to the configurational components included in the production-line-configuring devices 112, the device state data DT is accumulated, the accumulated device state data DT is analyzed, and on the basis of the analysis result, maintenance information IF pertaining to maintenance is outputted. As a result, it is possible that maintenance information IF of the production-line-configuring devices 112 is outputted in accordance with the installation environment and/or operating conditions of the product production lines L1. Therefore, a user or manager of the production-line-configuring devices 112 can easily ascertain the timing of the maintenance. Consequently, it is possible that maintenance of the production-line-configuring devices 112 is performed at an appropriate opportunity, and decreases in producibility of the products P are suppressed.

### (6-2)

In the device management system 100 according to the present embodiment, the analysis part 90i groups a plurality of production-line-configuring devices 112 of the same model and performs an analysis process in association with this grouping.

Due to this, it is possible that, as to a specific production-line-configuring device 112, while other production-line-configuring devices 112 of the same model have been grouped with the specific production-line-configuring device 112 and the analysis process is performed. As a result, it is possible that maintenance information IF of the production-line-configuring devices 112 is outputted with high accuracy, in accordance with the installation environment and/or operating conditions of the production lines. Consequently, maintenance of the production-line-configuring devices 112 can be performed with high accuracy at an appropriate opportunity, and decreases in producibility of the products P are further suppressed.

### (6-3)

In the device management system 100 according to the present embodiment, the analysis part 90i performs the analysis process as to a specific production-line-configuring device 112, on the basis of a comparison with other production-line-configuring devices 112 included in the same group made in the grouping.

Due to this, it is possible for the analysis process to be performed as to a specific production-line-configuring device 112 on the basis of the result of a comparison with other production-line-configuring devices 112 belonging to the same group. As a result, it is possible that maintenance information IF of the production-line-configuring devices 112 is outputted with high accuracy, in accordance with the installation environment and/or operating conditions of the production lines.

### (6-4)

In the device management system 100 according to the above embodiment, the analysis part 90i detects (estimates) adjustment anomalies of the components in the analysis process (the second process or the third process). Due to this, adjustment anomalies of the components are detected on the basis of device state data DT accumulated in association with the production-line-configuring devices 112, and maintenance information IF is outputted on the basis of the estimation result. As a result, it is possible that maintenance information IF of the production-line-configuring devices 112 is outputted with high accuracy, in accordance with the installation environment and/or operating conditions of the product production lines L1.

### (6-5)

In the device management system 100 according to the above embodiment, the analysis part 90i predicts signs of component degradation (malfunction or deteriorating of capability caused by degradation over time) in the analysis process (the second process or the third process).

Due to this, malfunction or deteriorating of capability of the configurational components are predicted on the basis of the accumulated device state data DT, and maintenance information IF is outputted on the basis of the prediction results. As a result, it is possible that maintenance information IF of the production-line-configuring devices 112 is outputted with high accuracy, in accordance with the installation environment and/or operating conditions of the production lines.

### (6-6)

In the device management system 100 according to the above embodiment, the analysis part 90i performs the analysis process (the third process) on the basis of capability information about the configurational components. Due to this, the analysis process is performed on the basis of capability information defined in advance in association with the configurational components of the production-line-configuring devices 112. As a result, it is possible that maintenance information IF of the production-line-configuring devices 112 is outputted with high accuracy, in accordance with the installation environment and/or operating conditions of the production lines.

### (6-7)

In the device management system 100 according to the above embodiment, the device state data storage part 90d, the analysis part 90i, and the server output part 90k of the management server 90 are connected with the production-line-configuring devices 112 via a communication network. The device state data storage part 90d, the analysis part 90i, and the server output part 90k of the management server 90 are placed in a remote location set apart from the space where the production-line-configuring devices 112 are installed.

Due to this, it is possible to construct the system using equipment installed in a remote location set apart from the facility where the production lines are configured. Consequently, versatility and convenience are improved.

### (6-8)

In the device management system 100 according to the above embodiment, the configurational components included in the production-line-configuring devices 112 to be subjected to the analysis process are a knife cylinder, a seal cylinder, a variety of other belts such as pull-down belt or timing belt, and/or the like of the bag-making and packaging machine 20.

Due to this, when a packaging machine is included as a production-line-configuring device 112, maintenance timing can easily be ascertained for components (knife cylinder, seal cylinder, a variety of other belts such as pull-down belt or timing belt, and/or the like) for which there is a higher incidence of malfunction and/or deteriorating of capability due to degradation over time.

### (7) Modifications

Modifications of the present embodiment are presented below. The following modifications may be combined as appropriate, as long as there are no discrepancies.

### (7-1) Modification A

In the device management system 100 according to the above embodiment, the combination weighing machine 10, the vertical pillow-type bag-making and packaging machine 20, the seal checker 30, and the boxing device 40 are included as production-line-configuring devices 112. These examples are not necessarily provided as limitations on the production-line-configuring devices 112 in the device management system 100, and changes can be made as appropriate.

For example, the device management system 100 may include, as a production-line-configuring device 112, an X-ray scanning device to detect foreign matter included in the products P and/or abnormalities in the shape of the products P. Additionally, for example, the device management system 100 may include a weighing device other than the combination weighing machine 10 as a production-line-configuring device 112. For example, the device management system 100 may include a packaging machine other than a vertical pillow-type machine as a production-line-configuring device 112. Additionally, for example, the device management system 100 may include a device disposed on the commodity manufacturing line L2 as a production-line-configuring device 112.

### (7-2) Modification B

In the device management system 100 according to the above embodiment, parameters specifying signs of degradation, adjustment anomalies or the like pertaining to the configurational components (pull-down belts, pull-down belt motors, timing belt, lateral sealing cylinder, steel belt, knife cylinder, or the like) of the bag-making and packaging machine 20, are given as examples of the device state data DT. It is apparent that these parameters are only specific examples of the device state data DT. Specifically, these parameters are not necessarily provided by way of limitation as to the device state data DT used in the device management system 100; changes can be made as appropriate. In the device management system 100, parameters relating to device state data DT pertaining to production-line-configuring devices 112 (the combination weighing machine 10, the boxing device 40, or the like.) other than the bag-making and packaging machine 20 are also appropriately used as necessary.

### (7-3) Modification C

In the above embodiment, the analysis process of the analysis part 90i is described the first process, second process, and third process as examples. However, there is no particular limitation as to the analysis process performed by the analysis part 90i; and any one of the first process, second process, and third process may be omitted as appropriate. Additionally, the analysis part 90i may perform a process other than the first process, second process, and third process as the analysis process, and may specify signs of degradation, adjustment anomalies or the like in the configurational components of the production-line-configuring devices 112.

### (7-4) Modification D

In the above embodiment, the analysis part 90i performs the analysis process for a specific production-line-configuring device 112, on the basis of a comparison with another production-line-configuring device 112 included in the same group in a grouping. However, this example is not provided by way of limitation; the analysis part 90i may perform the analysis process as to a specific production-line-configuring device 112, on the basis of a comparison with another production-line-configuring device 112 included in another group.

### (7-5) Modification E

In the above embodiment, the grouping table TB2 is created on the basis of grouping the same configurational components for production-line-configuring devices 112 of the same model. However, in the device management system 100, the method of grouping the production-line-configuring devices 112 is not provided by way of any particular limitation; the grouping table TB2 may be created by performing grouping through another method.

### (7-6) Modification F

In the above embodiment, an example is described (FIG 13, etc.) in which the maintenance information IF is transmitted as information that prompts maintenance in the event that signs of degradation and/or adjustment anomalies are estimated for the configurational components of the production-line-configuring devices 112. However, this example is not provided by way of limitation; the maintenance information IF may be transmitted as maintenance time period notifying information to notify of the maintenance time period in advance, before the maintenance time period elapses from the date when the most recent maintenance was performed.

### (7-7) Modification G

In the above embodiment, an example is described of a case in which maintenance information IF is transmitted from the management server 90 to the corresponding management computer 80 or production-line-configuring device 112, and this maintenance information IF is outputted in the device that received the maintenance information IF. However, this method of giving notification of the maintenance information IF is not provided by way of any particular limitation; changes can be made as appropriate.

For example, configuration may be adopted in which maintenance information IF is outputted from the management server 90 to a device other than a management computer 80 or a production-line-configuring device 112. The manager may be notified of the maintenance information IF by the maintenance information IF being outputted from a display part, an audio output part, and/or the like provided to the receiving device. In this embodiment, (a device, and/or the like, on) the manager side where the notification is received may give notification of the maintenance information IF to the staff of the factory 110 where the production-line-configuring device 112 is installed that includes the subject component.

### (7-8) Modification H

In the above embodiment, the functional parts (90a-90L) described as being included in the management server 90 do not necessarily need to be included in the management server 90. For example, some or all of these functional parts may be combined with any management computer 80, any production-line-configuring device 112, or any other device. Additionally, for example, some or all of these functional parts may be disposed independently so as to be capable of accessing the wide area network NW1 or the local network NW2.

### (7-9) Modification I

In the above embodiment, the production-line-configuring devices 112 are configured to be capable of accessing the wide area network NW1 by being connected to the management computers 80 via the local network NW2. However, this configuration is not provided by way of limitation; the production-line-configuring devices 112 may be configured to be capable of directly accessing the wide area network NW1 via a router, modem, or other piece of communication equipment.

### INDUSTRIAL APPLICABILITY

The present invention can be utilized in a device management system.

### REFERENCE SIGNS LIST

- 10: Combination weighing machine (weighing device)
- 20: Bag-making and packaging machine (packaging device)
- 23a, 23b: Pull-down belts
- 24: Vertical sealing mechanism
- 25: Lateral sealing mechanism
- 25a: Seal jaw
- 30: Seal checker
- 40: Boxing device
- 80: Management computer
- 90: Management server
- 90a: Server communication part
- 90b: Program storage part
- 90c: Device information storage part
- 90d: Device state data storage part (information accumulation part)
- 90e: Grouping information storage part
- 90f: Maintenance information storage part
- 90g: Acquisition part
- 90h: Maintenance flag
- 90i: Analysis part (information analysis part)
- 90j: Maintenance information creation part
- 90k: Server output part (maintenance information output part)
- 100: Device management system
- 110: Factory
- 112: Production-line-configuring device
- 120: Display part
- 201: Film
- BC: Cardboard box
- C: Commodities
- DT: Device state data
- FB: Case-making sheet
- Fc: Cylindrical film
- IF: Maintenance information
- L1: Product production line (production line)
- L2: Commodity manufacturing line
- NW 1: Wide area network (communication network)
- NW2: Local network
- P: Products
- TB1: Device information table
- TB2: Grouping table

### CITATION LIST

### PATENT LITERATURE

[Patent Literature 1] Japanese Laid-open Patent Publication No. 2004-331107

## Claims

1. A device management system to manage a plurality of production-line-configuring devices (112) that configure a production line for producing products, wherein
the production-line-configuring devices include a packaging device (20) configured to package the products, and/or a boxing device (40) configured to box the packaged products into boxes, and a weighing device (10) configured to weigh the products, and
the device management system comprises:
a device information storage part (90c) configured to store identifying information about the production-line-configuring devices (112);
an information accumulation part (90d) configured and arranged to accumulate component information comprising device state data (DT) pertaining to each of the production-line-configuring devices (112);
a maintenance flag (90h) configured for assessing whether or not maintenance is needed for the configurational components of the production-line-configuring devices (112);
an information analysis part (90i) configured and arranged to perform an analysis process of grouping a plurality of the production-line-configuring devices of a same model, wherein a grouping information storage part (90e) is configured to store information relating to the grouping of the plurality of production-line-configuring devices (112) including device state data (DT) and capability information registered separately for each specific configurational component of the production-line-configuring devices (112), and
the information analysis part (90i) is further configured and arranged to perform the analysis process as to a specific production-line-configuring device, on a basis of a comparison with other production-line-configuring devices included in the same group made in the grouping, wherein the information analysis part (90i) is further configured to analyze a state of a specific configurational component that is the subject component by comparing the device state data (DT) thereof and a numerical range defined in the capability information about the subject component, and when the parameter relating to the device state data (DT) of the subject component has a value greater or less than the corresponding parameter of another configurational component included in the same group or when this value deviates from the numerical capability range defined in the capability information, the information analysis part (90i) determines there to be a large possibility that a sign of degradation, and adjustment anomaly, or any abnormality has occurred in the subject component, and is configured to set the maintenance flag (90h) that corresponds to that configurational component accordingly; and
a maintenance information output part (90k) configured and arranged to output, on a basis of a result of the analysis process, maintenance information pertaining to maintenance of the configurational components.

2. The device management system according to claim 1, wherein
the information accumulation part (90d), the information analysis part (90i), and/or the maintenance information output part (90k) are connected with the production-line-configuring devices (112) via a communication network, and are placed in a remote location set apart from a space where the production-line-configuring devices are installed.

3. The device management system according to claim 1 or claim 2, wherein
the components include a knife cylinder, a seal cylinder, and/or a belt of the packaging device (20).

## Patentansprüche

1. Vorrichtungsverwaltungssystem zum Verwalten von mehreren Produktionslinien-konfigurierenden Vorrichtungen (112), die eine Produktionslinie zur Herstellung von Produkten konfigurieren, wobei
die Produktionslinien-konfigurierenden Vorrichtungen eine Verpackungsvorrichtung (20), die konfiguriert ist, die Produkte zu verpacken, und/oder eine Einschachtelungsvorrichtung (40), die konfiguriert ist, die verpackten Produkte in einzuschachteln, und eine Wiegevorrichtung (10) aufweisen, die konfiguriert ist, die Produkte zu wiegen, und
das Vorrichtungsverwaltungssystem aufweist:
einen Vorrichtungsinformationsspeicherteil (90c), der konfiguriert ist, Identifizierungsinformationen über die Produktionslinien-konfigurierenden Vorrichtungen (112) zu speichern;
einen Informationssammelteil (90d), der konfiguriert und eingerichtet ist, Komponenteninformationen zu sammeln, die Vorrichtungszustandsdaten (DT) aufweisen, die jede der Produktionslinien-konfigurierenden Vorrichtungen (112) betreffen;
ein Wartungskennzeichen (90h), das zum Beurteilen konfiguriert ist, ob eine Wartung für die Konfigurationskomponenten der Produktionslinien-konfigurierenden Vorrichtungen (112) erforderlich ist oder nicht;
einen Informationsanalyseteil (90i), der konfiguriert und eingerichtet ist, einen Analyseprozess des Gruppierens mehrerer Produktionslinien-konfigurierenden Vorrichtungen desselben Modells durchzuführen, wobei ein Gruppierungsinformationsspeicherteil (90e) konfiguriert ist, Informationen zu speichern, die die Gruppierung der mehreren Produktionslinien-konfigurierenden Vorrichtungen (112) betreffen, die Vorrichtungszustandsdaten (DT) und Fähigkeitsinformationen enthalten, die separat für jede spezifische Konfigurationskomponente der Produktionslinien-konfigurierenden Vorrichtungen (112) registriert sind, und der Informationsanalyseteil (90i) ferner konfiguriert und eingerichtet ist, den Analyseprozess in Bezug auf eine spezifische Produktionslinien-konfigurierende Vorrichtung auf der Grundlage eines Vergleichs mit anderen Produktionslinien-konfigurierenden Vorrichtungen durchzuführen, die in der gleichen Gruppe enthalten sind, die in der Gruppierung vorgenommen wird, wobei der Informationsanalyseteil (90i) ferner konfiguriert ist, einen Zustand einer spezifischen Konfigurationskomponente, die die Zielkomponente ist, durch Vergleichen deren Vorrichtungszustandsdaten (DT) und eines numerischen Bereichs, der in den Fähigkeitsinformationen über die Zielkomponente definiert ist, zu analysieren, und wenn der Parameter, der die Vorrichtungszustandsdaten (DT) der Zielkomponente betrifft, einen Wert aufweist, der größer oder kleiner ist als der entsprechende Parameter einer anderen Konfigurationskomponente, die in der gleichen Gruppe enthalten ist, oder wenn dieser Wert von dem numerischen Fähigkeitsbereich abweicht, der in den Fähigkeitsinformationen definiert ist, bestimmt der Informationsanalyseteil (90i), dass es eine große Möglichkeit gibt, dass ein Zeichen einer Verschlechterung und eine Einstellanomalie oder irgendeine Abnormalität in der betreffenden Komponente aufgetreten ist, und ist konfiguriert, das Wartungskennzeichen (90h), das dieser Konfigurationskomponente entspricht, entsprechend zu setzen; und
einen Wartungsinformations-Ausgabeteil (90k), der konfiguriert und eingerichtet ist, basierend auf einem Ergebnis des Analyseprozesses Wartungsinformationen auszugeben, die sich auf die Wartung der Konfigurationskomponenten beziehen.

2. Geräteverwaltungssystem nach Anspruch 1, wobei der Informationssammelteil (90d), der Informationsanalyseteil (90i) und/oder der Wartungsinformationsausgabeteil (90k) mit den Produktionslinien-konfigurierenden Vorrichtungen (112) über ein Kommunikationsnetzwerk verbunden sind und an einem entfernten Ort angeordnet sind, der von einem Raum getrennt ist, in dem die Produktionslinien-konfigurierenden Vorrichtungen installiert sind.

3. Geräteverwaltungssystem nach Anspruch 1 oder Anspruch 2, wobei
die Komponenten einen Messerzylinder, einen Versiegelungszylinder und/oder ein Band der Verpackungsvorrichtung (20) umfassen.

## Revendications

1. Système de gestion de dispositifs servant à gérer une pluralité de dispositifs de configuration de chaîne de production (112) qui configurent une chaîne de production servant à la production de produits, dans lequel
les dispositifs de configuration de chaîne de production comprennent un dispositif d'emballage (20) configuré pour emballer les produits, et/ou un dispositif de mise en boîte (40) configuré pour la mise en boîte des produits emballés dans des boîtes, et un dispositif de pesage (10) configuré pour peser les produits, et
le système de gestion de dispositifs comporte :
un organe de stockage d'informations de dispositif (90c) configuré pour stocker des informations d'identification concernant les dispositifs de configuration de chaîne de production (112) ;
un organe d'accumulation d'informations (90d) configuré et agencé pour accumuler des informations de composants comportant des données d'état de dispositif (DT) se rapportant à chacun des dispositifs de configuration de chaîne de production (112) ;
un drapeau de maintenance (90h) configuré pour évaluer si oui ou non une opération de maintenance est nécessaire pour les composants configurationnels des dispositifs de configuration de chaîne de production (112) ;
un organe d'analyse d'informations (90i) configuré et agencé pour effectuer un processus d'analyse de groupement d'une pluralité de dispositifs de configuration de chaîne de production d'un même modèle, dans lequel un organe de stockage d'informations de groupement (90e) est configuré pour stocker des informations se rapportant au groupement de la pluralité de dispositifs de configuration de chaîne de production (112) comprenant des données d'état de dispositif (DT) et des informations de capacité enregistrées séparément pour chaque composant configurationnel spécifique des dispositifs de configuration de chaîne de production (112), et
l'organe d'analyse d'informations (90i) est par ailleurs configuré et agencé pour effectuer le processus d'analyse quant à un dispositif spécifique de configuration de chaîne de production, en se basant sur une comparaison avec d'autres dispositifs de configuration de chaîne de production se trouvant dans le même groupe réalisé dans le groupement, dans lequel l'organe d'analyse d'informations (90i) est par ailleurs configuré pour analyser un état d'un composant configurationnel spécifique qui est le composant objet en comparant les données d'état de dispositif (DT) de celui-ci et une plage numérique définie dans les informations de capacité concernant le composant objet, et quand le paramètre se rapportant aux données d'état de dispositif (DT) du composant objet a une valeur supérieure ou inférieure au paramètre correspondant d'un autre composant configurationnel se trouvant dans le même groupe ou quand cette valeur dévie de la plage de capacité numérique définie dans les informations de capacité, l'organe d'analyse d'informations (90i) détermine qu'il y a une forte possibilité qu'un signe de dégradation, et une anomalie d'ajustement, ou toute anormalité se soit produit dans le composant objet, et est configuré pour établir le drapeau de maintenance (90h) qui correspond à ce composant configurationnel en conséquence ; et
un organe de sortie d'informations de maintenance (90k) configuré et agencé pour émettre en sortie, en se basant sur un résultat du processus d'analyse, des informations de maintenance se rapportant à la maintenance des composants configurationnels.

2. Système de gestion de dispositifs selon la revendication 1, dans lequel
l'organe d'accumulation d'informations (90d), l'organe d'analyse d'informations (90i) et/ou l'organe de sortie d'informations de maintenance (90k) sont connectés aux dispositifs de configuration de chaîne de production (112) par le biais d'un réseau de communication, et sont placés dans un emplacement distant séparé d'un espace où les dispositifs de configuration de chaîne de production sont installés.

3. Système de gestion de dispositifs selon la revendication 1 ou la revendication 2, dans lequel
les composants comprennent un cylindre porte-couteaux, un cylindre de scellage, et/ou une courroie du dispositif d'emballage (20).
